# FASCICULE DE BREVET EUROPEEN

(11) **EP 1 272 332 B1**
(45) Date de publication et mention de la délivrance du brevet: **14.12.2005**
(21) Numéro de dépôt: 01921487.3
(22) Date de dépôt: 05.04.2001
(51) Int. Cl.: B29C 65/74, B29C 65/08

(54) **PROCEDES DE SOUDAGE PAR ULTRASONS ET EMBALLAGES ASSOCIES**
ULTRASCHALLSCHWEISSVERFAHREN SOWIE DAZUGEHÖRIGE VERPACKUNGEN
ULTRASONIC SEALING METHODS AND RELATED PACKAGES

(30) Priorité: 05.04.2000 FR 0004335; 06.04.2000 FR 0004464
(43) Date de publication de la demande: 08.01.2003
(73) Titulaire: Masterfoods, 45550 Saint-Denis-de-l'Hôtel (FR)
(72) Inventeur: BLANCHARD, Daniel, F-45510 Neuvy-en-Sullias (FR); FAUL, Patrick, F-45110 Chateauneuf-sur-Loire (FR)
(74) Mandataire: Hirsch & Associés
(86) Numéro de dépôt international: PCT/FR2001/001027
(87) Numéro de publication internationale: WO 2001/074568

(56) Documents cités:
- EP-A- 0 333 390
- EP-A- 0 498 364
- AT-B- 382 112
- DE-A- 3 034 955
- DE-A- 3 146 585
- DE-C- 19 541 129
- DE-U- 8 809 048
- FR-A- 2 665 683
- FR-A- 2 784 051
- GB-A- 952 581
- US-A- 3 434 906
- US-A- 3 657 033
- US-A- 4 097 327
- US-A- 4 410 383
- US-A- 5 632 831
- PATENT ABSTRACTS OF JAPAN vol. 005, no. 025 (M-055), 14 février 1981 (1981-02-14) -& JP 55 154119 A (BROTHER IND LTD), 1 décembre 1980 (1980-12-01)
- PATENT ABSTRACTS OF JAPAN vol. 013, no. 154 (M-814), 14 avril 1989 (1989-04-14) -& JP 63 315223 A (HITACHI CONSTR MACH CO LTD), 22 décembre 1988 (1988-12-22)

## Description

La présente invention concerne de manière générale les opérations de soudage et de coupe d'au moins deux feuilles souples superposées, à l'aide d'un dispositif du type comprenant une sonotrode et une enclume disposées en regard l'une de l'autre de sorte que leurs surfaces en regard définissent un interstice de passage des feuilles superposées à souder, avec une section d'entrée et une section de sortie, la sonotrode vibrant à hautes fréquences pour émettre des ondes ultrasonores.

L'invention concerne plus précisément un procédé de soudage et/ou de coupe mettant en oeuvre un dispositif du type précité, ledit procédé pouvant être mis en oeuvre pour souder et éventuellement couper deux films ou feuilles souples.

Plus particulièrement, des applications avantageuses du procédé selon l'invention concernent :
- le soudage et éventuellement en outre la coupe, à l'aide d'un dispositif du type précité, des deux bords latéraux d'emballages souples,
- ainsi que la fermeture par soudage, à l'aide d'un dispositif du type précité, d'un emballage tel qu'évoqué ci-dessus.

Elle concerne en outre, un emballage souple, réalisé notamment selon un des procédés évoqués ci-dessus.

Un tel emballage peut être réalisé à partir de films plastiques monocouches, ou multicouches.

Une application avantageuse, mais non limitative, de l'invention est la fabrication de pochons ou sachets souples contenant des matières alimentaires, par exemple des matières alimentaires pour animaux, de tels pochons ou sachets étant généralement destinés à être fermés hermétiquement et traités thermiquement après leur remplissage et leur fermeture (dans la suite de ce texte, on emploiera indifféremment les termes « emballage » ou « pochon » pour désigner des emballages souples).

Ces pochons peuvent, une fois remplis, être stérilisés en étant chauffés en ambiance humide et sous pression.

Pour résister à un tel traitement thermique, ils sont réalisés à partir d'un ou plusieurs film(s) de structure particulière.

Plus particulièrement, ils sont généralement fabriqués à partir d'un ou plusieurs film(s), chaque film comprenant une couche supérieure et une couche inférieure destinées à constituer les faces externe et interne desdits emballages réalisés en matière plastique, une couche centrale prise en sandwich entre lesdites couches supérieure et inférieure, réalisée en métal léger.

Plus précisément encore, les films à partir desquels sont fabriqués ces emballages peuvent présenter les caractéristiques suivantes :
- la couche supérieure est généralement une couche de polyéthylène téréphtalate associée ou non à une couche de polyamide,
- la couche centrale est réalisée en un matériau étanche au gaz, en particulier l'aluminium, et la couche inférieure est une couche de polypropylène associée ou non à une couche de polyamide,
- entre chaque couche, il est prévu une enduction d'adhésif permettant de lier les différentes couches entre elles,
- en outre, la couche de polyéthylène téréphtalate peut être imprimée sur sa face intérieure en vue de décorer l'extérieur dudit pochon. En effet, la couche de polyéthylène téréphtalate sert généralement de support d'impression et donne l'aspect extérieur du pochon.
- la couche centrale en aluminium forme une barrière au gaz, notamment à l'oxygène, et à la vapeur d'eau, pour isoler de l'extérieur les matières contenues à l'intérieur du pochon,
- la couche de polyamide constitue une couche anti-perforation quand cela est nécessaire en fonction des applications ultérieures du pochon, et la couche de polypropylène sert d'agent soudant pour la confection du pochon, donne la tenue mécanique générale du pochon et assure l'étanchéité au niveau des soudures dudit pochon.

De tels pochons peuvent contenir des solides, des solides à caractère humide, des liquides ou encore une association de solides et de liquides.

Actuellement, de tels pochons présentent des formes diverses.

Ils peuvent être plats, à trois ou quatre soudures, ou à soufflets avec trois côtés soudés et un fond soudé en forme de soufflet.

De tels pochons peuvent également comporter deux soufflets latéraux, ou deux soufflets positionnés en haut et en bas du pochon avec des bords latéraux soudés.

Une configuration répandue, car particulièrement simple, de ces pochons est la configuration « plate », dans laquelle le pochon est simplement réalisé par l'assemblage de deux feuilles. Un tel assemblage est réalisé en deux temps.

Dans un premier temps, on constitue un pochon dont un bord demeure ouvert, en soudant les deux feuilles sur trois des quatre côtés du pochon (qui a la plupart du temps une forme généralement rectangulaire).

Pour réaliser ce soudage, on utilise une feuille repliée sur elle-même selon une ligne qui constituera un bord du pochon, ou bien deux feuilles séparées que l'on superpose.

Dans les deux cas, le soudage des côtés des feuilles peut être associé à une coupe pour détacher chaque feuille d'un film plastique.

Dans un deuxième temps, on ferme le dernier côté du pochon après son remplissage ; une telle fermeture se fait également par un soudage, qui peut également être associé à une coupe.

Dans tous les cas, les soudures effectués doivent assurer :
- une très bonne étanchéité de l'intérieur du pochon non seulement au liquide, mais également au gaz (en particulier si le pochon contient des produits liquides, humides ou périssables),
- ainsi qu'une très bonne tenue mécanique du pochon.

Les opérations de soudage mises en oeuvre pour constituer ces pochons sont généralement réalisées selon la technologie du soudage par conduction des bords rapprochés des flancs de chaque pochon, de façon à chauffer la couche interne en polypropylène de chaque flanc par conduction au travers de la couche centrale en aluminium.

A la suite du soudage par conduction, il est prévu un refroidissement qui renforce la soudure ainsi réalisée.

La ligne de soudure réalisée par un tel procédé présente généralement une largeur de plusieurs millimètres, pour garantir la résistance et l'étanchéité du scellage.

Or, il serait avantageux de pouvoir réduire la largeur de la ligne de soudure afin de réaliser des économies de matière.

En effet, les pochons sont généralement fabriqués en quantités très importantes de sorte qu'il est intéressant pour les fabricants de rechercher toutes les économies possibles sur le prix de revient unitaire des pochons ; la largeur relativement importante de la ligne de soudure constitue donc un premier inconvénient du soudage par conduction.

Par ailleurs, la mise en oeuvre de ce procédé de soudage par conduction avec des films plastiques défilant en continu s'avère problématique, en particulier du fait des frictions existant entre les éléments fixes et les éléments mobiles du dispositif de soudage.

Ce type de procédé est donc généralement mis en oeuvre selon un mode fractionné, sur des films défilant pas à pas.

Et le principe de soudage pas à pas présente une limite de cadence. Même en effectuant une avance simultanée de deux pochons par pas, ce procédé atteint ses limites mécaniques de fonctionnement du fait notamment qu'il faut décélérer puis accélérer les pochons avant et après le poste de soudage, et que le système présente une certaine inertie.

Afin d'augmenter la cadence de scellage de tels emballages ou pochons, et de passer par exemple d'une cadence de 120 emballages/min (limite actuelle des cadences pour les procédés de soudage par chauffage) à une valeur nettement supérieure (de l'ordre de 500 emballages/min, voire plus), on a envisagé d'utiliser un dispositif de soudage par ultrasons avec un défilement des emballages en continu.

Dans ce domaine, on connaît déjà des documents EP 333390 et GB-A-952581, des dispositifs de soudage par ultrasons entre une enclume et une sonotrode oscillant à fréquence ultrasonore, d'au moins deux feuilles superposées réalisées en matière plastique qui défilent en continu suivant un trajet déterminé.

Les dispositifs de soudage par ultrasons décrits dans ces documents précités, présentent comme caractéristique commune un interstice de passage des deux feuilles superposées à souder, défini entre les surfaces en regard de la sonotrode et de l'enclume, qui présente une section qui diminue puis qui augmente entre son entrée et sa sortie.

Selon le document EP 333390, cette configuration de section de l'interstice de passage, est réalisée exclusivement pour que la force appliquée par le dispositif sur les surfaces à souder soit homogène sur toute la longueur de l'interstice de soudage.

Mais rien n'indique que la configuration de EP 333390 permette de réduire de manière sensible la largeur des lignes de soudure.

De plus, le dispositif de EP 333390 n'est pas destiné à exécuter une coupe des feuilles à souder. Il est au contraire précisé que pour les applications du dispositif décrit dans ce document on cherche à éviter toute coupe ou perforation des matériaux à souder.

Or comme on l'a dit il peut être souhaitable d'associer au soudage des feuilles une coupe, en particulier dans le cas répandu où on veut réaliser dans un même temps :
- une coupe pour constituer les feuilles du pochon à partir de films défilant en continu,
- et le soudage des bords de la feuille repliée, ou des feuilles superposées, en vue de constituer le pochon.

Ainsi, le dispositif de EP 333390 ne permet pas de remplir de manière satisfaisante les objectifs des fabricants tels que présentés plus haut (réduction sensible de la largeur de soudure tout en autorisant une cadence élevée et en garantissant de très bonnes qualités de tenue mécanique et d'étanchéité, ainsi que possibilité d'effectuer une coupe simultanément au soudage).

Et il en est de même pour le dispositif de GB-A-952581.

En effet, concernant la largeur de la ligne de soudure, il est précisé que le dispositif de ce document vise au contraire à la garder relativement importante, en augmentant la largeur de la zone de contact entre les feuilles à souder et le dispositif (la largeur de la ligne de soudure étant dans le cas du dispositif de GB-A-952581 toujours inférieure à celle de la zone de contact entre les feuilles et le dispositif).

Et ce document ne mentionne pas non plus la possibilité d'effectuer une coupe dans les feuilles à souder.

On connaît par ailleurs de EP 498 364 un dispositif de soudage/coupe de feuilles défilant en continu.

Dans ce dispositif, une lame de coupe est disposée en aval de la sonotrode de soudage selon la direction de défilement des feuilles. La sonotrode et la lame constituent deux éléments séparés assurant respectivement les fonctions de soudage, et de coupe.

Un inconvénient lié à une telle configuration est qu'il est très délicat d'obtenir une faible largeur de ligne de soudure : la lame de coupe qui se trouve en aval de la sonotrode doit en effet venir attaquer la ligne de soudure en son milieu.

Et il est ainsi nécessaire de prévoir une ligne de soudure suffisamment large pour garantir que la lame de coupe attaque bien ladite ligne dans sa région médiane.

Il est d'ailleurs précisé dans EP 498 364 que la diminution de la largeur des lignes de soudure n'est aucunement un objectif recherché par le dispositif de ce document : on y recherche au contraire des « bandes de soudure plus larges que celles obtenues par les méthodes traditionnelles » (cf. col. 4 I. 52-54 de ce document).

En outre, un inconvénient supplémentaire associé au dispositif de EP 498 364 est qu'il est délicat d'obtenir une très bonne symétrie du profil de coupe de la feuille, c'est-à-dire d'obtenir des deux côtés de la coupe la même largeur de ligne de soudure. Cet inconvénient dérive également du fait que la soudure et la coupe sont effectuées de manière séquentielle, et non simultanément. Ceci peut conduire à des inhomogénéités de production.

Enfin, il existe des documents divulguant des dispositifs utilisant les ultrasons pour effectuer non seulement un soudage, mais également une coupe des films. On trouvera un exemple d'un tel dispositif dans le document FR 2 665 683.

Mais le dispositif décrit dans ce document ne permet pas de traiter de films défilant en continu, de sorte que la cadence associée est limitée par le caractère fractionné du procédé. De plus, aucune indication n'est donnée dans ce document sur la largeur des lignes de soudure.

EP-A-1 154 892 est un art antérieur au sens de l'article 54(3) et (4) CBE et diwlgue un appareil de soudage par ultrasons comprenant une sonotrode et une enclume formant entre eux un interstice convergent, l'enclume présentant un profil pointu. Il divulgue en outre un procédé de fermeture d'emballage souple utilisant cet appareil de soudage.

Le but de l'invention est de permettre d'éliminer les inconvénients évoqués ci-dessus.

Afin d'atteindre ce but, l'invention propose un procédé de fabrication d'emballages souples tel que défini dans la revendication 1. L'invention propose aussi un procédé de fermeture d'un emballage souple tel que défini dans la revendication 3. Les revendications dépendantes définissent des modes de réalisations préférés de ces procédés.

Enfin, l'invention propose aussi des emballages souples tels que définis dans les revendications 20 et 21. Les revendications dépendantes 22 à 26 définissent des modes de réalisation préférés de l'emballage selon la revendication 21.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de la sonotrode et de l'enclume d'un dispositif de soudure par ultrasons,
- la figure 2 est une vue schématique en coupe longitudinale de détail à l'échelle 10 de la sonotrode et de l'enclume du dispositif de soudage par ultrasons,
- les figures 3 et 4 sont des vues schématiques de côté et de dessus du dispositif de soudage par ultrasons selon une forme particulièrement bien adaptée à une application de fermeture de pochons dont les bords latéraux ont déjà été assemblés,
- la figure 5 est une représentation schématique en coupe transversale de deux films superposés reçus dans un dispositif pour être soudés ensemble, et éventuellement coupés,
- la figure 6 est un graphe montrant l'évolution d'une caractéristique de résistance mécanique d'un pochon réalisé selon l'invention, en fonction de l'évolution de paramètres du procédé selon l'invention,
- la figure 7 est une vue de principe en coupe transversale de deux films multicouches soudés selon l'invention,
- la figure 8 est une vue équivalente à la figure 7, sur laquelle les deux films ont été coupés.

Sur les figures, on a représenté schématiquement un dispositif de soudage par ultrasons 100 d'au moins deux feuilles superposées 1,2 réalisées en matière plastique, par exemple du polypropylène, qui défilent en continu suivant un trajet déterminé F.

A cet égard, le dispositif comprend des moyens pour faire défiler les feuilles. De tels moyens peuvent être connus et ne seront pas détaillés plus avant.

On précise que si les exemples qui seront décrits en détail ci-dessous concernent des pochons réalisés simplement à partir de deux feuilles 1 et 2, l'invention trouve également des applications particulièrement avantageuses dans la réalisation de pochons à partir de films multicouches du type évoqué plus haut (couche d'aluminium entre deux couches plastiques).

Le dispositif 100 comprend une sonotrode 101 qui vibre à hautes fréquences pour émettre des ondes ultrasonores, et une enclume 102.

La sonotrode 101 et l'enclume 102 sont disposées en regard l'une de l'autre de sorte que leurs surfaces en regard 101', 102' définissent un interstice de passage 103 des deux feuilles superposées à souder 1,2, cet interstice de passage présentant une section d'entrée 104 et une section de sortie 105.

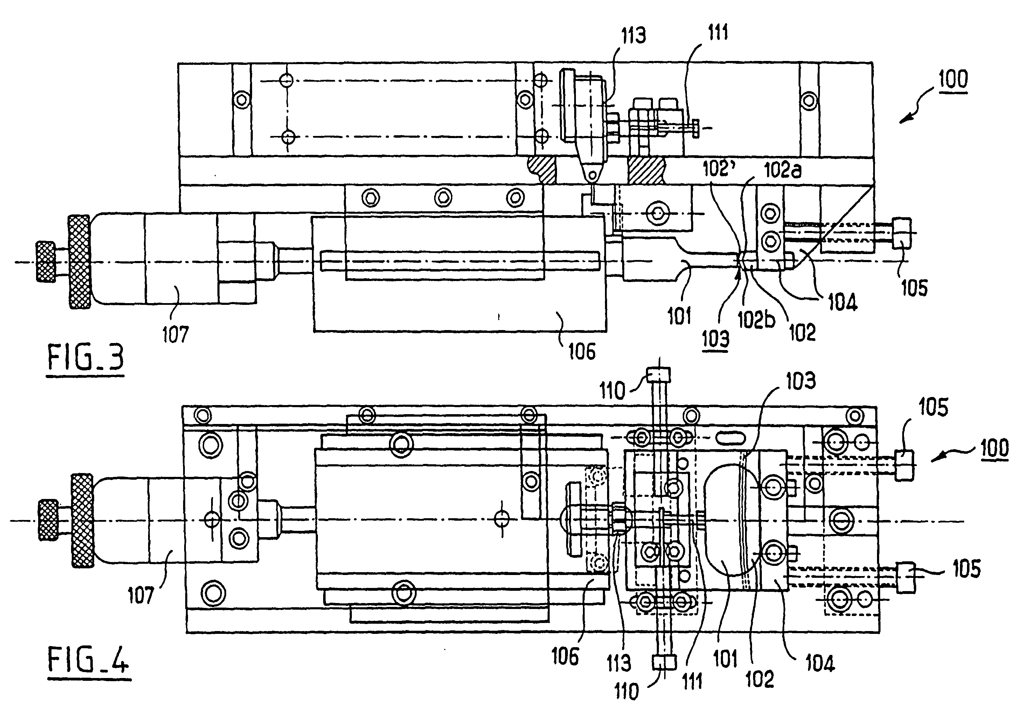

Dans l'exemple représenté sur les figures 3 et 4 la sonotrode 101 et l'enclume 102 s'étendent dans un plan généralement horizontal et les feuilles superposées à souder sont destinées à défiler dans un plan généralement vertical.

Bien entendu, on peut prévoir selon une variante non représentée, de disposer la sonotrode et l'enclume verticalement avec des feuilles superposées à souder défilant dans un plan horizontal.

La hauteur de la section d'entrée 104 de l'interstice de passage 103 est légèrement supérieure à la somme des épaisseurs des feuilles superposées à souder 1,2. Ici, l'épaisseur des feuilles superposées à souder est de l'ordre de 200 µm et la hauteur de la section d'entrée 104 est égale à 220 µm environ. Ceci permet aux feuilles à souder d'entrer facilement dans l'interstice de passage prévu entre la sonotrode et l'enclume du dispositif de soudage par ultrasons.

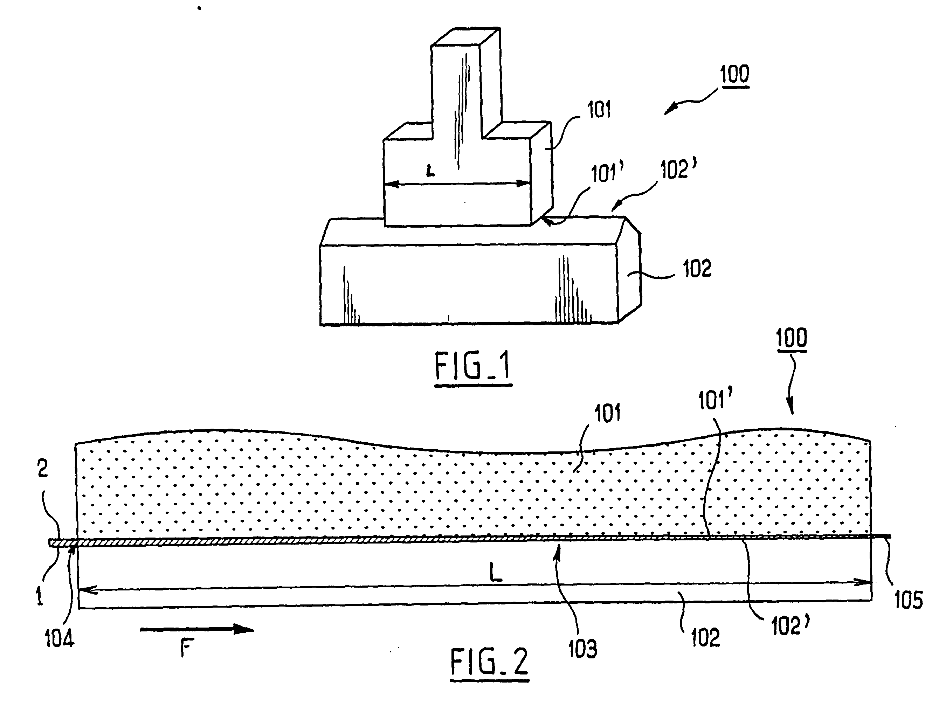

Selon une première caractéristique particulièrement avantageuse du dispositif de soudage par ultrasons 100, les surfaces en regard 101', 102' de la sonotrode 101 et de l'enclume 102 convergent l'une vers l'autre de sorte que la section dudit interstice de passage 103 diminue continûment entre sa section d'entrée 104 et sa section de sortie 105 (voir figure 2 en particulier).

Dans un mode de réalisation préféré, les surfaces 101' et 102' sont constituées de surfaces planes, et l'enclume 102 est fixe.

Selon l'exemple particulier décrit, la section d'entrée 104 de l'interstice de passage 103 est supérieure d'un facteur 1,3 environ à la section de sortie 105 dudit interstice 103.

Ainsi, la hauteur de la section de sortie 105 dudit interstice 103 est ici de l'ordre de 170µm. Cette hauteur de 170µm donne une épaisseur de soudure réalisée par le dispositif de soudage de l'ordre de 135 µm.

Les feuilles superposées 1,2 défilant à vitesse constante, l'interstice de passage 103 défini entre la sonotrode 101 et l'enclume 102 présente une longueur déterminée L en fonction de la vitesse déterminée, constante ou variable, de défilement desdites feuilles pour un temps de contact de la sonotrode en vibration et de l'enclume 102 avec lesdites feuilles 1, 2 choisi, de façon à obtenir un soudage étanche des feuilles entre elles sur une largeur de soudage déterminée.

Selon l'exemple représenté, la vitesse de défilement desdites feuilles est constante et de l'ordre de 62,5 m/min, ce qui donne une longueur de l'interstice de passage égale à 75 millimètres environ, pour un temps de contact de 72 ms et une largeur de la bande de soudure de 1 millimètre environ.

Comme le montre plus particulièrement la figure 3, et selon une autre caractéristique essentielle de l'invention, la surface 102' de l'enclume 102 en regard de la sonotrode 101 présente un profil en forme de pointe formé par des pans inclinés 102a, 102b formant un angle aigu entre eux. Ici, l'angle formé entre les pans inclinés 102a, 102b est de l'ordre de 140 degrés. Cet angle peut en tout état de cause être compris dans une plage s'étendant de 120 à 160 degrés.

De la sorte, les pans 102a, 102b de l'enclume et la surface plane de la sonotrode mutuellement en regard forment un angle ici de l'ordre de 20 degrés.

Ainsi, à l'aide d'un tel dispositif de soudage, on forme entre les feuilles à souder et le dispositif de soudage (et plus particulièrement l'enclume et la sonotrode) une zone de contact qui correspond essentiellement à la ligne d'arête de l'enclume.

Et la zone de contact est extrêmement étroite (d'une largeur inférieure au millimètre, la pointe du profil de l'enclume ayant en réalité un rayon de courbure inférieur à 1 millimètre, par exemple 0,5 millimètre ou de préférence 0,25 millimètre).

Par conséquent, la ligne de soudure dans les deux feuilles en matière plastique superposées, qui est d'une épaisseur de l'ordre de 135µm, a une largeur de l'ordre du millimètre, ce qui constitue un progrès important par rapport aux performances des dispositifs connus.

Il est important de noter que la configuration du dispositif de soudage comprenant la combinaison :
- d'un l'interstice 103 convergent, qui est dans l'exemple décrit ci-dessus défini par les surfaces planes de l'enclume et de la sonotrode,
- et du profil en pointe de la surface 102' de l'enclume, de manière à former une arête vive,
est particulièrement avantageuse.

En effet, cette configuration permet de recevoir dans l'interstice 103 les feuilles 1, 2 à souder qui défilent continûment par rapport à l'enclume et à la sonotrode, et de réaliser en regard de la ligne d'arête de l'enclume une soudure de très faible largeur des feuilles.

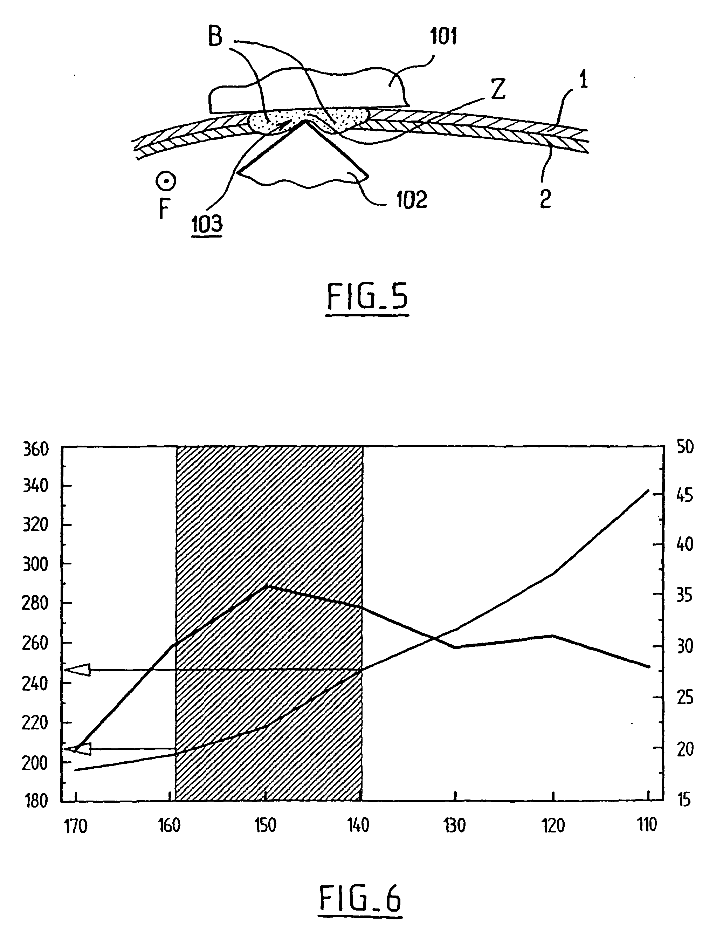

Plus précisément et comme représenté sur la figure 5 (sur laquelle comme sur la figure 1 les angles et dimensions ne sont pas à l'échelle, cette figure illustrant simplement le principe de l'invention), la combinaison de la convergence des surfaces généralement planes de la sonotrode 101 et de l'enclume 102, avec le profil en pointe de cette enclume, ne permet pas seulement de souder les feuilles 1 et 2 qui défilent continûment selon la direction F par rapport à l'enclume et à la sonotrode.

En effet, du fait de la forme de l'enclume, de l'orientation de l'arête de cette enclume parallèlement à la direction du mouvement relatif entre les films à souder, et de la distance entre enclume et sonotrode (l'amplitude des oscillations de la sonotrode étant définie de sorte que la sonotrode peut venir très près de l'enclume en bout de course d'oscillation, et même en affleurement de l'enclume pour l'application à la coupe combinée avec le soudage), la matière des films 1 et 2 est refoulée sur les côtés et subit un fluage de chaque côté de la zone de contact Z qui est située au milieu de l'interstice de passage 103.

Ce fluage crée ainsi de chaque côté de la zone de contact Z un bourrelet B à l'intérieur duquel les matériaux qui constituent les feuilles 1 et 2 se mélangent et constituent un amalgame qui crée une liaison extrêmement forte.

Ainsi, la ligne de soudure entre les films 1 et 2 comprend les deux bourrelets B qui s'étendent longitudinalement sur les films, chacun de ces bourrelets constituant en soi une ligne de soudure primaire.

La Demanderesse a effectué des tests en résistance de traction de deux feuilles soudées ensemble grâce à cette technique ; ces résultats sont représentés sur la figure 6.

Plus précisément, cette figure représente en Newtons sur l'axe de droite des ordonnées la traction N correspondant à la rupture de la liaison mécanique entre les deux feuilles soudées (courbe en traits épais), et sur l'axe des abscisses la hauteur de référence de l'interstice 103 (c'est à dire la distance entre la pointe de l'enclume et la face 101' de la sonotrode lorsque ladite sonotrode est dans sa position de référence autour de laquelle elle oscille), en microns.

Les résultats de la figure 6 font apparaître que les niveaux de traction de rupture sont tout à fait satisfaisants, de l'ordre de 20 à 35 Newtons, voire davantage. Ces résultats montrent également qu'il existe une plage de valeurs de la hauteur de référence de l'interstice 103 (comprise entre 140 et 160 microns dans le cas décrit) pour laquelle la traction de rupture N est élevée, avec un maximum pour une hauteur de 150 microns.

L'axe des ordonnées de gauche indique quant à lui en Watts la puissance consommée par le dispositif pour le soudage (courbe en traits fins). Cette puissance croît de 200 Watts à 340 Watts lorsque la hauteur de référence décroît de 170 à 110 microns.

Un résultat du fluage décrit ci-dessus est que la largeur de la zone de soudure, délimitée par les deux bourrelets B, est comme on l'a dit de l'ordre du millimètre seulement (chaque bourrelet ayant par lui-même une largeur sensiblement inférieure au millimètre).

Un autre résultat de cette configuration, et du fluage associé qui provoque l'amalgame décrit ci-dessus, est la très bonne qualité du soudage réalisé au niveau de chaque bourrelet en termes d'étanchéité et de résistance mécanique, en combinaison avec la très faible largeur des lignes de soudure qui correspondent aux bourrelets.

Plus précisément, la Demanderesse a effectué des tests d'étanchéité à l'air sur des pochons dont les feuilles, constituées chacune de trois couches dont une couche centrale en aluminium, ont été soudées par le procédé décrit ci-dessus.

Les résultats ont montré que l'étanchéité des pochons ainsi obtenus était supérieure d'un facteur 10 aux valeurs habituellement recherchées, les taux de fuite d'air mesurés étant de l'ordre de 2,4 10⁻⁴ centimètres cubes d'air par pochon et par jour (pour un pochon dont les quatre côtés ont été ainsi soudés).

Et on remarquera que ce procédé peut être réalisé sur des films défilant en continu, permettant un rendement de l'ordre de 500 pochons/minute ou plus pour le soudage, et une vitesse de défilement des feuilles par rapport au dispositif de l'ordre de 25 m/minute pour les applications à la coupe.

On remarquera également que du fait que l'interstice 103 est défini par deux parois planes (surfaces respectives planes de la sonotrode 101 et de l'enclume 102), la diminution de la hauteur dudit interstice est parfaitement régulière. Ceci favorise la mise en oeuvre de l'invention sur des films défilant à haute vitesse, et permet d'augmenter les cadences de production.

Un autre effet avantageux de cette configuration géométrique où les faces en regard de l'enclume et de la sonotrode sont planes est que la longueur de la zone de contact entre l'enclume et la sonotrode est considérablement augmentée, par rapport à des configurations connues où un des éléments parmi l'enclume et la sonotrode n'est pas plan (par exemple enclume circulaire qui ne permet d'obtenir qu'une zone de contact de longueur limitée entre l'enclume et la sonotrode).

Ceci permet de réaliser la soudure et éventuellement la coupe de manière progressive, ce qui constitue également un facteur permettant d'augmenter la vitesse de défilement des films. Et par rapport à une configuration où l'enclume serait circulaire et montée rotative pour accompagner le défilement du film, la configuration selon l'invention présente l'avantage de nécessiter beaucoup moins de réglage et d'ajustement de jeux éventuels, car le seul élément mobile du dispositif est la sonotrode.

A la place d'un profil en pointe définie par deux plans formant une arête droite, l'enclume peut avoir tout profil saillant qui définit une arête vive, du moment que la zone de contact entre les feuilles et le dispositif est très étroite, de l'ordre du dixième de millimètre, et que la combinaison suivante est présente :
- convergence de l'interstice selon la direction de défilement des feuilles, et
- existence d'une arête saillante de l'enclume.

Il est également possible de réaliser dans un interstice 103 convergent une zone de contact étroite selon une arête associée non pas à l'enclume 102, mais à la sonotrode, la ou les face(s) de l'enclume tournée(s) vers la sonotrode pouvant avoir un profil plat, ou quelconque. Il est également possible que l'enclume et la sonotrode aient des profils saillants toutes deux.

On préférera toutefois associer à l'enclume, et uniquement à elle, le profil saillant en arête, car il est connu que la face des films qui est tournée vers la sonotrode est celle qui subit le plus de contraintes mécaniques du fait de la vibration de la sonotrode. Et pour éviter d'endommager les films que l'on soude, il est préférable que seule l'enclume ait un profil saillant.

La sonotrode 101 vibre à une fréquence comprise entre 20 et 40 KHz environ et, pour le soudage, à une amplitude comprise entre 10 et 100 microns, préférentiellement égale à environ 70 microns.

Il est prévu des vis de réglage 110 permettant d'ajuster la position de la sonotrode par rapport à l'enclume dans le plan horizontal. Il est également prévu un comparateur 113 qui permet de régler l'interstice entre l'enclume 102 et la sonotrode 101.

En outre, les vis de réglage 105 permettent de régler l'angle entre la sonotrode 101 et l'enclume 102.

Ce système de réglage permet d'ajuster en fonction des épaisseurs de feuilles à souder les positions relatives de la sonotrode et de l'enclume et donc la hauteur des sections d'entrée et de sortie de l'interstice de passage desdites feuilles.

Avantageusement, ce dispositif de soudage par ultrasons 100 permet de souder des feuilles en matière plastique superposées défilant à une vitesse comprise entre 50 et 100 m/min, préférentiellement entre 60 et 80 m/min.

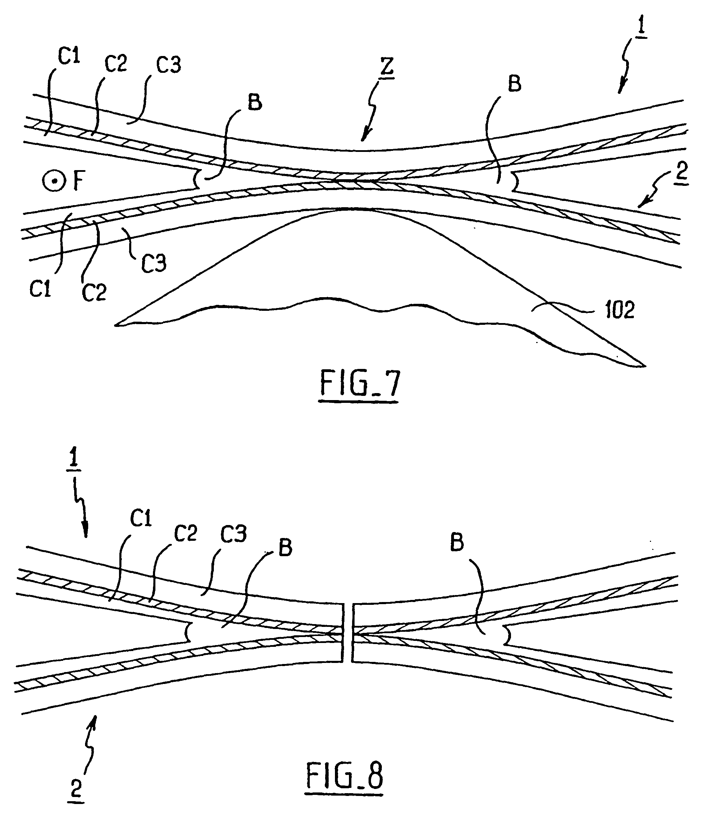

Selon un autre aspect de l'invention et plus particulièrement référence aux figures 7 et 8, le dispositif de soudage par ultrasons décrit ci-dessus en référence au soudage de deux films 1 et 2 peut avantageusement être mis en oeuvre pour fabriquer et/ou fermer des emballages comportant deux flancs liés par leurs bords latéraux, chaque flanc comprenant des faces interne et externe en matière plastique et une couche centrale en métal léger prise en sandwich entre les deux faces interne et externe.

Selon un procédé de fermeture par soudage selon l'invention, les emballages défilent sur un banc en étant posés verticalement les uns à la suite des autres, ce qui implique ici la position horizontale de la sonotrode et de l'enclume telle que représentée sur les figures 3 et 4.

A l'aide du dispositif de soudage 100, on réalise au niveau des bords supérieurs des flancs de chaque emballage en défilement à vitesse déterminée, constante ou variable, de soudage par ultrasons des faces internes des flancs de chaque emballage, selon une ligne de soudure s'étendant au moins sur la majeure partie de la largeur de chaque emballage, et en particulier sur la largeur du pochon.

Les emballages utilisés ici sont tels que la couche centrale C2 de chacun de leurs flancs 1, 2 est réalisée en aluminium, la face interne de chacun de leurs flancs comporte une couche C1 en polypropylène ou une couche de polyamide et

une couche de polypropylène, et la face externe de chacun de leurs flancs comprend une couche C3 de polyéthylène téréphtalate éventuellement revêtue d'une couche supplémentaire de polyamide.

La couche externe est destinée à servir de support à un motif de décoration.

Le dispositif de soudage par ultrasons tel que décrit en référence aux figures 1 à 4, permet de souder ensemble les faces internes des flancs de chaque emballage au travers de la face externe et de la couche centrale.

En effet, le polypropylène présente une température de fusion inférieure à la température de fusion de la couche de la face externe et sous l'action des oscillations de la sonotrode, il se produit une excitation des particules constituant la couche interne qui rentre en fusion pour former les bourrelets B.

Et on provoque ainsi non seulement la création d'un bourrelet issu de la fusion des couches internes qui sont au contact l'une de l'autre, mais également la mise en contact des couches d'aluminium des deux flancs, ce qui permet d'obtenir les très bonnes propriétés d'étanchéité évoquées ci-dessus (voir figure 7).

Il est à noter qu'on peut selon l'invention ajuster le niveau d'énergie transmis aux films 1 et 2 pour que seules les couches internes C1 en polypropylène fondent et forment de chaque côté de l'enclume 102 (qui est sur les figures 7 et 8 représentée de manière schématique afin d'illustrer le principe de l'invention, la sonotrode n'étant pas représentée sur ces figures) un bourrelet B résultant du fluage des couches C1 des deux films 1 et 2.

Dans ce cas, les couches C2 en aluminium des films 1 et 2 viennent en contact l'une avec l'autre de manière à former une barrière étanche au gaz.

Et les couches C3 externes ne sont alors pas altérées par le soudage, la température de fusion du polyéthylène étant supérieure à celle du polypropylène.

En augmentant la pression appliquée par la sonotrode aux films multicouches 1 et 2, on peut comme représenté sur la figure 8 effectuer en même temps que le soudage des feuilles une coupe au niveau de la zone de contact Z.

Dans ce cas, les bourrelets B formés entre les couches C1 de polypropylène de chaque film assurent la cohésion des bords ainsi coupés et soudés, ainsi que l'étanchéité de cette soudure (les couches C2 en aluminium étant solidaires des bourrelets B et maintenues en contact l'une avec l'autre).

Comme cela a déjà été décrit précédemment, la ligne de soudure de chaque emballage présente une épaisseur de l'ordre de l'ordre de 135µm et une largeur de l'ordre du millimètre.

De plus, avantageusement, grâce aux oscillations de la sonotrode contre les feuilles à souder, on peut éventuellement faire disparaître des particules de matière alimentaire pouvant rester à l'endroit où doit être effectuée la soudure, et réaliser ainsi une soudure étanche dudit emballage.

Un tel dispositif permet également de fermer de chaque emballage défilant à vitesse élevée au poste de soudage sans abîmer les couches externe et centrale de ces derniers.

Selon une caractéristique avantageuse du procédé selon l'invention, pour accélérer le processus de soudage des flancs de chaque emballage, on peut prévoir préalablement au soudage par ultrasons de chaque emballage, de chauffer chaque flanc de chaque emballage pour ramollir les faces internes des flancs de chaque emballage. Ceci permet d'obtenir un soudage étanche des films avec plus de flexibilité en ce qui concerne les positions relatives de l'enclume et de la sonotrode.

Le chauffage peut être réalisé par exemple par conduction ou injection de vapeur.

De plus on peut ajuster l'interstice entre l'enclume et la sonotrode ainsi que la pression exercée entre la sonotrode et l'enclume sur les flancs de chaque emballage à souder (par l'intermédiaire d'une commande d'un vérin associé à la sonotrode), de telle sorte que lorsqu'on réalise la ligne de soudure dans chaque emballage, on réalise simultanément une ligne de coupe. Cet aspect sera détaillé plus loin dans ce texte.

Selon d'autres caractéristiques du dispositif de soudage par ultrason, comme le montrent plus particulièrement les figures 3 et 4, la sonotrode 101 est montée sur un support 106 en liaison avec un vérin 107 qui agit sur la sonotrode de sorte que celle-ci exerce sur les feuilles à souder 101 une pression déterminée comprise entre 0.2.10⁵ et 6.10⁵Pa.

Selon le procédé décrit, on peut également envisager deux dispositifs de soudage tels que représentés sur les figures 1 à 4 disposés selon le trajet de défilement des emballages, à distance déterminée et à des hauteurs différentes ou à la même hauteur de sorte que l'on réalise une seule ligne de soudure ou deux lignes de soudure juxtaposées des flancs de chaque emballage (une ligne de soudure en dessous de l'autre).

En outre, avantageusement, à l'aide du dispositif de soudage par ultrasons, on peut détecter la qualité du soudage ou la présence de particules indésirables dans la zone de soudage de chaque emballage, grâce à la détection de la consommation de puissance du dispositif de soudage, utilisée comme signal de détection.

Un tel signal capté pourra être traité pour identifier et éjecter les emballages défectueux, c'est-à-dire pas soudés de manière étanche.

Selon ce procédé, il est possible de fermer environ 500 pochons par minute ce qui représente un gain considérable dans le coût de fabrication de ces pochons.

De plus, le procédé de fermeture de pochons utilisant le dispositif permet de réaliser une soudure étanche des flancs des pochons en défilement. Cela est confirmé par le tableau 1 qui exprime les résultats d'un biotest réalisé sur des pochons soudés selon le procédé conforme à l'invention à l'aide de plusieurs modes de réalisation du dispositif.

**Tableau 1 :**

| VITESSE DES POCHONS (m/minute) ⇔ 500 pochons/minute | Longueur (millimètre) de l'interstice de soudage du dispositif selon l'invention | TEMPS DE CONTACT Sonotrode/enclume Du dispositif selon l'invention | RESULTATS BIOTEST % Pochons étanches aux bactéries |
|---|---|---|---|
| 62.5 | 25 | 24 ms | 73% |
| 62.5 | 35 | 34 ms | 92 % |
| 62.5 | 75 | 72 ms | 100 % |

L'application à la fermeture de pochons décrite ci-dessus n'est bien sûr pas limitative, l'invention concernant de manière générale le soudage de films souples pour d'autres applications que la fermeture de pochons.

Par ailleurs, le dispositif décrit ci-dessus peut avantageusement être mis en oeuvre non seulement pour le soudage des feuilles du pochon, mais également pour effectuer simultanément une coupe des feuilles.

Dans le cas d'une coupe combinée avec la soudure, le niveau de pression appliqué sur les feuilles, sera fixé aux alentours de 6.10⁵Pa, et la hauteur de référence de l'interstice 103 peut être réduite, de préférence à une valeur inférieure à 50 microns, par exemple 20 microns.

Dans ce cas, la demi amplitude des vibrations de la sonotrode est ajustée à une valeur très légèrement inférieure (de l'ordre d'un dixième de micron) à la hauteur de l'interstice de référence, de manière à ce que la sonotrode effleure l'enclume en bout de course.

Cette application est avantageuse car elle permet de constituer de chaque côté de la ligne de coupe, qui est en regard de l'arête de l'enclume, une ligne de soudure primaire qui correspond à la largeur du bourrelet, cette largeur étant comme on l'a dit sensiblement inférieure au millimètre.

Ainsi, dans le cas d'un soudage/coupe, la largeur des lignes de soudure est sensiblement inférieure au millimètre.

Et les résultats des tests effectués par la Demanderesse sur des pochons dont des bords ont été soudés et coupés selon l'invention, de sorte que les flancs du pochon ne sont scellés que par la ligne de soudure primaire d'un bourrelet, ont été similaires à ceux effectués sur des pochons soudés sans coupe.

On a décrit ci-dessus (plus particulièrement en référence aux figures 3 et 4) un mode de réalisation de l'invention dans lequel on ferme par soudure le haut de pochons défilant en continu, les bords latéraux desdits pochons ayant préalablement été soudés entre eux.

Il est également possible de mettre en oeuvre l'invention sur des films défilant en continu selon une même direction F, avec la même vitesse, pour effectuer un soudage et éventuellement une coupe, selon toute direction désirée par rapport à la direction F de défilement des films, par exemple la direction perpendiculaire à cette direction F.

Pour cela, on place sur un chariot mobile un ensemble formé d'une sonotrode et d'une enclume reprenant la configuration décrite ci-dessus (surfaces convergentes pour former l'interstice 103, arête de l'enclume), le tout pouvant se déplacer de sorte que les films défilent entre la sonotrode qui oscille, et l'enclume.

Dans ce cas, l'ensemble comprenant la sonotrode et l'enclume est orienté de sorte que les section d'entrée et de sortie délimitant l'interstice 103 sont alignées avec la direction du mouvement des films à souder par rapport audit ensemble. Ainsi, les parois de l'interstice 103 diminuent lorsqu'on décrit une ligne parallèle à cette direction.

Le mouvement du chariot est dans ce cas commandé pour effectuer une alternance de :
- séquences de soudage (et éventuellement coupe), pendant lesquelles le chariot quitte une position de départ en étant animé d'un mouvement combinant une avance parallèle à la direction F avec la même vitesse que les films qu'il conservera pendant toute la séquence, et une avance selon la direction de soudage désirée. Cette deuxième composante du mouvement peut des faire selon une ligne droite, ou non,
- séquences de repositionnement, pendant lesquelles le chariot retourne en position de départ prés à entamer une nouvelle séquence de soudage.

Le chariot peut ainsi décrire un va-et-vient selon une ligne formant un angle compris entre 0 et 90° avec la direction F, la vitesse du chariot étant ajustée pendant les séquences de retour pour se repositionner au point de départ à temps pour réattaquer les films avec un écart désiré par rapport à le précédente ligne de soudage parcourue.

Il est également possible de prévoir deux ou plusieurs chariots, certains effectuant une séquence de soudage pendant que d'autres reviennent en des positions de départ désirées.

Dans le cas où on ajuste la pression de la sonotode pour effectuer une coupe simultanément au soudage, on obtient ainsi des feuilles provenant du découpage des films selon des lignes de coupe correspondant à la zone de contact entre le dispositif et les films, lesdites feuilles étant soudées entre elles par leurs bords latéraux du fait du fluage de la matière des films de chaque côté de chaque ligne de coupe.

Et il est également possible de ne placer qu'une sonotrode sur chaque chariot, et de prévoir sous les films en défilement au moins une enclume fixe ayant un profil en pointe et dont l'arête est orientée selon le trajet suivi par le chariot pendant sa séquence de soudage/coupe de sorte que la sonotrode portée par le chariot coopère avec l'arête de l'enclume.

La présente invention n'est nullement limitée aux modes de réalisation décrits et représentée. Des variantes de réalisation sont possibles sans sortir du cadre défini par les revendications annexées.

En particulier, il n'est pas obligatoire que les feuilles à souder et éventuellement à couper défilent en continu ; tout mode de réalisation dans lequel est établi un mouvement relatif entre les feuilles (qui devront toujours avoir quant à elles un mouvement synchronisé l'une par rapport à l'autre) et le dispositif de soudage (ensemble comprenant l'enclume et la sonotrode) entre dans le cadre de la présente invention.

De même, l'invention n'est pas limitée à l'application à des pochons contenant des matières alimentaires pour animaux ; elle couvre évidemment les pochons ou sachets mettant en oeuvre des sachets réalisés à partir de feuilles en matière plastique et destinés à d'autres applications, notamment l'emballage de produits alimentaires tels que les friandises ou du café lyophilisé.

## Revendications

1. Procédé de fabrication d'emballages souples, comprenant les étapes de :
- fourniture de deux feuilles superposées (1, 2) ;
- fourniture d'un ensemble de soudage formé de deux éléments qui sont respectivement une enclume (102) et une sonotrode (101) :
■ en disposant l'enclume et la sonotrode en regard l'une de l'autre de sorte que leurs surfaces en regard (101', 102') forment un interstice (103) de passage des feuilles à souder comportant une section d'entrée (104) et une section de sortie (105) avec la section dudit interstice de passage diminuant entre sa section d'entrée et sa section de sortie, et
■ en fournissant une arrête saillante de soudage débouchant dans ledit interstice de passage sur au moins un élément dudit ensemble de soudage,
- mise en vibration de la sonotrode à hautes fréquences pour émettre des ondes ultrasonores,
- création d'un mouvement relatif entre, d'une part, les feuilles superposées et, d'autre part, ledit ensemble de soudage, selon une direction (F) de défilement déterminée par rapport à l'ensemble de soudage avec passage desdites feuilles superposées dans ledit interstice pour souder ensemble lesdites feuilles de sorte à constituer des flancs d'emballage, ladite arrête saillante s'étendant selon une direction généralement parallèle à ladite direction de défilement (F).

2. Procédé selon la revendication 1, comprend la fourniture de ladite arête saillante sur l'enclume (102).

3. Procédé de fermeture d'un emballage souple, comprenant les étapes de :
- fourniture d'un emballage souple comportant deux feuilles constituant deux flancs, lesdits flancs étant liés par leurs bords latéraux et l'emballage étant ouvert à une extrémité ;
- fourniture d'un ensemble de soudage formé de deux éléments qui sont respectivement une enclume (102) et une sonotrode (101) :
■ en disposant l'enclume et la sonotrode en regard l'une de l'autre de sorte que leurs surfaces en regard (101', 102') forment un interstice (103) de passage des feuilles à souder comportant une section d'entrée (104) et une section de sortie (105) avec la section dudit interstice de passage diminuant entre sa section d'entrée et sa section de sortie, et
■ en fournissant sur la sonotrode une arrête saillante de soudage débouchant dans ledit interstice de passage,
- mise en vibration de la sonotrode à hautes fréquences pour émettre des ondes ultrasonores,
- création d'un mouvement relatif entre, d'une part, ledit emballage et, d'autre part, ledit ensemble de soudage, selon une direction (F) de défilement déterminée par rapport à l'ensemble de soudage avec passage desdites feuilles de l'emballage dans ledit interstice pour souder ensemble lesdites feuilles de sorte à fermer l'emballage, ladite arrête saillante s'étendant selon une direction généralement parallèle à ladite direction de défilement (F).

4. Procédé selon la revendication 1, 2 ou 3, comprenant une étape de :
- fourniture de ladite arrête saillante avec un profil en pointe formé par des plans inclinés (102a, 102b) formant un angle aigu entre eux.

5. Procédé selon la revendication 1, 2 ou 3, comprenant une étape de :
- fourniture de ladite arrête saillante avec un profil en pointe formé par des plans inclinés (102a, 102b) formant un angle compris entre 120° et 160°, de préférence de l'ordre de 140 degrés.

6. Procédé selon l'une quelconque des revendications 1 à 5, comprenant une étape de:
- arrangement de l'ensemble de soudage de façon à ce que la section d'entrée dudit interstice de passage est supérieure d'un facteur compris entre 1,2 et 2 environ à la section de sortie dudit interstice.

7. Procédé selon l'une quelconque des revendications 1 à 6, dans lequel l'étape de création d'un mouvement relatif comprend le défilement desdites feuilles en maintenant l'ensemble de soudage fixe.

8. Procédé selon l'une des revendications 1 à 6, comprenant une étape de :
- montage de l'ensemble de soudage sur un chariot mobile ;
et dans lequel l'étape de création d'un mouvement relatif comprend le défilement dudit chariot par rapport aux dites feuilles selon une direction de soudage désirée.

9. Procédé selon l'une quelconque des revendications 1 à 8, comprenant une étape de:
- association d'un vérin ou d'un contrepoids avec la sonotrode pour que celle-ci exerce sur lesdites feuilles une pression déterminée comprise entre 0,2.10⁵ et 6.10⁵ Pa.

10. Procédé selon l'une quelconque des revendications 1 à 9, dans lequel l'étape de création d'un mouvement relatif comprend le défilement desdites feuilles par rapport à l'ensemble de soudage à une vitesse comprise entre 50 et 150 m/mn, de préférence entre 60 et 80 m/mn.

11. Procédé selon l'une quelconque des revendications 1 à 10, comprenant une étape de:
- fluage de la matière desdites feuilles de chaque côté de ladite arête lors du passage des feuilles dans ledit interstice.

12. Procédé selon la revendication 11, dans lequel l'étape de fluage comprend la création de chaque côté de ladite arête d'un bourrelet (B) de fluage constituant une ligne de soudure primaire.

13. Procédé selon l'une des revendications précédentes, comprenant la coupe desdites feuilles simultanément à leur soudage.

14. Procédé selon la revendication 13, comprenant une avance continue desdites feuilles par rapport à l'ensemble de soudage lors de la coupe.

15. Procédé selon l'une quelconque des revendications 1 à 14, comprenant une étape de:
- chauffage desdites feuilles préalablement au soudage pour ramollir les faces internes de chaque feuille.

16. Procédé selon l'une quelconque des revendications 1 à 15, dans lequel lesdites feuilles comprennent une couche centrale de matériau étanche au gaz entre deux couches de matériaux plastiques.

17. Procédé selon la revendication 16, dans lequel la couche centrale comprend de l'aluminium.

18. Procédé selon la revendication 16 ou 17, comprenant la fusion des couches internes respectives des deux feuilles qui sont en regard l'une de l'autre lors du soudage avec les couches centrales des deux feuilles respectives venant en contact l'une avec l'autre.

19. Procédé selon la revendication 18, dans lequel la couche interne de chaque feuille comporte du polypropylène.

20. Emballage souple comprenant deux flancs liés par leurs bords latéraux, l'emballage étant susceptible d'être obtenu par un procédé selon la revendication 1 ou l'une quelconque des revendications dépendantes de la revendication 1.

21. Emballage souple susceptible d'être obtenu par un procédé selon la revendication 18 ou 19, comprenant :
- deux flancs constitués par deux feuilles comprenant une couche centrale de matériau étanche au gaz entre deux couches de matériaux plastiques ; et
- une ligne de soudure liant lesdites feuilles en regard l'une de l'autre, les couches centrales respectives des deux feuilles étant en contact l'une avec l'autre sur la ligne de soudure.

22. Emballage souple selon la revendication 21, dans lequel la couche centrale comprend de l'aluminium.

23. Emballage souple selon la revendication 21 ou 22, dans lequel la couche interne de chaque feuille comporte du polypropylène.

24. Emballage souple selon l'une des revendications 21 à 23, dans lequel la largeur de ladite ligne de soudure est de l'ordre du millimètre.

25. Emballage souple selon l'une quelconque des revendications 21 à 24, dans lequel les couches centrales qui sont en contact l'une de l'autre constituent une barrière étanche au gaz.

26. Emballage souple selon la revendication 25, ayant un taux de fuite d'air de l'ordre de 2,4.10⁻⁴ cm³/jour.

## Patentansprüche

1. Verfahren zum Herstellen von weichen Verpackungen, umfassend die folgenden Schritte:
- Bereitstellen von zwei übereinander angeordneten Folien (1, 2);
- Bereitstellen einer Schweißeinrichtung, die aus zwei Elementen gebildet ist, bei denen es sich um einen Amboß (102) und um eine Sonotrode (101) handelt:
• wobei der Amboß und die Sonotrode zueinander weisend angeordnet werden, so daß ihre einander gegenüberliegenden Oberflächen (101', 102') einen Spalt (103) für den Durchgang der miteinander zu verschweißenden Folien bilden, wobei der Spalt einen Einlaßabschnitt (104) und einen Auslaßabschnitt (105) aufweist, wobei der Querschnitt des genannten Spalts für den Durchgang zwischen seinem Einlaßabschnitt und dem Auslaßabschnitt abnimmt, und
• wobei auf der Sonotrode eine vorstehende Schweißkante bereitgestellt wird, die in den genannten Spalt für den Durchgang vorsteht,
- in Schwingungen versetzen der Sonotrode mit hohen Frequenzen, um Ultraschallwellen auszusenden,
- Erzeugen einer relativen Bewegung zwischen den übereinander angeordneten Folien auf der einen Seite und der Schweißeinrichtung auf der anderen Seite, in einer Richtung (F) des Vorbeilaufs, die in Bezug auf die Schweißeinrichtung festgelegt ist, mit einem Durchgang der genannten übereinander angeordneten Folien durch den genannten Spalt, um die genannten Folien so miteinander zu verschweißen, daß sie die Seitenteile der Verpackung bilden, wobei die genannte vorstehende Kante sich in einer Richtung erstreckt, die im wesentlichen parallel zu der genannten Richtung des Vorbeilaufs (F) ist.

2. Verfahren nach Anspruch, **dadurch gekennzeichnet, daß** es die Bereitstellung der genannten vorspringenden Kante auf dem Amboß (102) umfaßt.

3. Verfahren zum Verschließen einer weichen Verpackung, mit den folgenden Schritten:
- Bereitstellen einer weichen Verpackung, die zwei Folien aufweist, welche zwei Seitenteile bilden, wobei die genannten Seitenteile durch ihre seitlichen Ränder miteinander verbunden sind und die Verpackung an einem Ende offen ist;
- Bereitstellen einer Schweißeinrichtung, die aus zwei Elementen gebildet ist, bei denen es sich um einen Amboß (102) und um eine Sonotrode (101) handelt:
• wobei der Amboß und die Sonotrode zueinander weisend angeordnet werden, so daß ihre einander gegenüberliegenden Oberflächen (101', 102') einen Spalt (103) für den Durchgang der miteinander zu verschweißenden Folien bilden, wobei der Spalt einen Einlaßabschnitt (104) und einen Auslaßabschnitt (105) aufweist, wobei der Querschnitt des genannten Spalts für den Durchgang zwischen seinem Einlaßabschnitt und dem Auslaßabschnitt abnimmt, und
• wobei auf der Sonotrode eine vorstehende Schweißkante bereitgestellt wird, die in den genannten Spalt für den Durchgang vorsteht,
- in Schwingungen versetzen der Sonotrode mit hohen Frequenzen, um Ultraschallwellen auszusenden,
- Erzeugen einer relativen Bewegung zwischen der genannten Verpackung auf der einen Seite und der Schweißeinrichtung auf der anderen Seite, in einer Richtung (F) des Vorbeilaufs, die in Bezug auf die Schweißeinrichtung festgelegt ist, mit einem Durchgang der genannten Folien der Verpackung durch den genannten Spalt, um die genannten Folien so miteinander zu verschweißen, daß die Verpackung geschlossen wird, wobei die genannte vorstehende Kante sich in einer Richtung erstreckt, die im wesentlichen parallel zu der genannten Richtung des Vorbeilaufs (F) ist.

4. Verfahren nach Anspruch 1, 2 oder 3, **dadurch gekennzeichnet, daß** es den Schritt umfaßt:
- Bereitstellen der genannten vorstehenden Kante mit einem spitzen Profil, welches durch geneigte Ebenen (102a, 102b) gebildet ist, die einen spitzen Winkel zwischen sich einschließen.

5. Verfahren nach Anspruch 1, 2 oder 3, **dadurch gekennzeichnet, daß** es den Schritt umfaßt:
- Bereitstellen der genannten vorstehenden Kante mit einem spitzen Profil, welches durch geneigte Ebenen (102a, 102b) gebildet ist, die einen Winkel bilden, der zwischen 120° und 160° liegt und bevorzugt etwa 140° beträgt.

6. Verfahren nach einem der Ansprüche 1 bis 5, **dadurch gekennzeichnet, daß** der Schritt enthalten ist:
- Anordnung der Schweißeinrichtung auf eine solche Weise, daß der Einlaßabschnitt des genannten Spalts für den Durchgang um einen Faktor, der etwa zwischen 1,2 und 2 liegt, größer ist als der Ausgangsabschnitt des genannten Spalts.

7. Verfahren nach einem der Ansprüche 1 bis 6, **dadurch gekennzeichnet, daß** der Schritt der Erzeugung einer relativen Bewegung einen Vorbeilauf der genannten Folien umfaßt, während die Schweißeinrichtung ortsfest gehalten wird.

8. Verfahren nach einem der Ansprüche 1 bis 6, **gekennzeichnet durch** den Schritt:
Anbringen der Schweißeinrichtung auf einem beweglichen Schlitten;
- und wobei der Schritt der Erzeugung einer relativen Bewegung den Vorbeilauf des genannten Schlittens in Bezug auf die genannten Folien entlang einer gewünschten Schweißrichtung umfaßt.

9. Verfahren nach einem der Ansprüche 1 bis 8, **gekennzeichnet durch** den Schritt:
- Zuordnung eines Druckstempels oder eines Gegengewichts zu der Sonotrode, damit diese auf die genannten Folien einen vorbestimmten Druck ausübt, der zwischen 0,2x10⁵ und 6x10⁵ Pa liegt.

10. Verfahren nach einem der Ansprüche 1 bis 8, **dadurch gekennzeichnet, daß** der Schritt der Erzeugung einer relativen Bewegung den Vorbeilauf der genannten Folien in Bezug auf die Schweißeinrichtung mit einer Geschwindigkeit umfaßt, die zwischen 50 und 150 m/mn und bevorzugt zwischen 60 und 80 m/mn liegt.

11. Verfahren nach einem der Ansprüche 1 bis 10, **gekennzeichnet durch** den Schritt:
- Ein Fließen oder eine plastische Verformung des Materials der genannten Folien auf jeder Seite der genannten Kante bei dem Durchgang der Folien in dem genannten Spalt.

12. Verfahren nach Anspruch 11, **dadurch gekennzeichnet, daß** der Schritt der plastischen Verformung die Erzeugung, auf jeder Seite der genannten Kante, eines Wulstes (B) der plastischen Verformung umfaßt, der eine primäre Schweißnaht bildet.

13. Verfahren nach einem der vorangehenden Ansprüche, **dadurch gekennzeichnet, daß** die genannten Folien gleichzeitig mit ihrer Verschweißung geschnitten werden.

14. Verfahren nach Anspruch 13, **dadurch gekennzeichnet, daß** die genannten Folien in Bezug auf die Schweißeinrichtung während des Schneidens kontinuierlich vorgeschoben werden.

15. Verfahren nach einem der Ansprüche 1 bis 14, **gekennzeichnet durch** den Schritt:
- Erwärmung der genannten Folien vor der Verschweißung, um die inneren Flächen einer jeden Folie zu erweichen.

16. Verfahren nach einem der Ansprüche 1 bis 15, **dadurch gekennzeichnet, daß** die genannten Folien eine zentrale Schicht aus einem Material aufweisen, das gasdicht ist, zwischen zwei Schichten aus einem Kunststoffmaterial.

17. Verfahren nach Anspruch 16, **dadurch gekennzeichnet, daß** die zentrale Schicht aus Aluminium besteht.

18. Verfahren nach Anspruch 16 oder 17, **dadurch gekennzeichnet, daß** die jeweiligen inneren Schichten der beiden Folien, die einander gegenüberliegend angeordnet sind, verschmolzen werden, bei der Verschweißung mit den zentralen Schichten der beiden jeweiligen Folien, die in Kontakt miteinander kommen.

19. Verfahren nach Anspruch 18, **dadurch gekennzeichnet, daß** die innere Schicht einer jeden Folie aus Polypropylen besteht.

20. Weiche Verpackung mit zwei Seitenteilen, die an ihren seitlichen Rändern miteinander verbunden sind, wobei die Verpackung durch ein Verfahren nach Anspruch 1 oder einen der Unteransprüche, die auf Anspruch 1 rückbezogen sind, erhalten werden kann.

21. Weiche Verpackung, die durch ein Verfahren nach Anspruch 18 oder 19 erhalten werden kann, umfassend:
- zwei Seitenteile, die durch zwei Folien gebildet sind, welche eine zentrale Schicht aus einem gasdichten Material zwischen zwei Schichten aus einem Kunststoffmaterial aufweisen; und
- eine Schweißnaht, die die genannten Folien, die einander gegenüberliegend angeordnet sind, verbindet, wobei die jeweiligen zentralen Schichten der beiden Folien auf der Schweißnaht in Kontakt miteinander stehen.

22. Weiche Verpackung nach Anspruch 21, **dadurch gekennzeichnet, daß** die zentrale Schicht aus Aluminium besteht.

23. Weiche Verpackung nach Anspruch 21 oder 22, **dadurch gekennzeichnet, daß** die innere Schicht einer jeden Folie aus Polypropylen besteht.

24. Weiche Verpackung nach einem der Ansprüche 21 bis 23, **dadurch gekennzeichnet, daß** die Breite der genannten Schweißnaht in der Größenordnung eines Millimeters liegt.

25. Weiche Verpackung nach einem der Ansprüche 21 bis 24, **dadurch gekennzeichnet, daß** die zentralen Schichten, die in Kontakt miteinander stehen, eine Sperre bilden, die gasdicht ist.

26. Weiche Verpackung nach Anspruch 25, die eine Rate der Undichtigkeit von Luft in der Größenordnung von 2,4x10⁻⁴ cm³/Tag liegt.

## Claims

1. Method for producing flexible packages comprising the steps of:
- providing two superimposed sheets (1, 2) to be sealed,
- providing a sealing assembly consisting of two elements which are respectively an anvil (102) and a sonotrode (101),
• and arranging said assembly with the sonotrode and the anvil opposite each other so that their facing surfaces (101', 102') form an interstice (103) for passing through the sheets to be sealed, said interstice having an inlet section (104) and an outlet section (105) decreasing between its inlet section and its outlet section, and
• providing a projecting sealing ridge emerging into said passage interstice on at least one element of said sealing assembly,
- vibrating the sonotrode at high frequencies to emit ultrasonic waves, and
- generating a relative movement between the superimposed sheets and said sealing assembly along a specific feeding direction (F) relative to the sealing assembly, with said superimposed sheets passing through said interstice to weld said sheets together to form the sides of the package, said projecting sealing ridge extending along a direction globally parallel to said feeding direction (F).

2. Method according to claim 1, comprising:
- providing said projecting ridge on the anvil (102).

3. Method for closing a flexible package comprising the steps of:
- providing a flexible package comprising two sheets constituting two sides, said sides being joined by their side edges, the package being open at one end;
- providing a sealing assembly consisting of two elements which are respectively an anvil (102) and a sonotrode (101):
• and arranging the sonotrode and the anvil opposite each other so that their facing surfaces (101', 102') form an interstice (103) for passing through the sheets to be sealed, said interstice having an inlet section (104) and an outlet section (105) decreasing between its inlet section and its outlet section, and
• providing on the sonotrode a projecting sealing ridge emerging into said passage interstice,
- vibrating the sonotrode at high frequencies to emit ultrasonic waves, and
- generating a relative movement between said package and said sealing assembly along a specific feeding direction (F) relative to the sealing assembly, with said sheets of the package passing through said interstice to weld said sheets together to close the package, said projecting sealing ridge extending along a direction globally parallel to said feeding direction (F).

4. Method according to claim 1, 2 or 3, comprising:
- providing said projecting sealing ridge with a pointed profile formed by inclined planes (102a, 102b) that form between them an acute angle.

5. Method according to claims 1, 2 or 3, comprising:
- providing said projecting sealing ridge with a pointed profile formed by inclined planes (102a, 102b) that form between them an angle of between 120° to 160°, and preferably around 140 degrees.

6. Method according to any one of claims 1 to 5, comprising:
- arranging said sealing assembly so that the inlet section of said passage interstice is greater than the section of said interstice outlet section by a factor of between around 1.2 and 2.

7. Method according to any one of claims 1 to 6, in which generating a relative movement comprises feeding through the sheets, the sealing assembly being fixed.

8. Method according to any one of claims 1 to 6, comprising a step of:
- mounting the sealing assembly on a mobile carriage,
and in which generating a relative movement comprises and moving said carriage in relation to the sheets along a desired sealing direction.

9. Method according to any one of claims 1 to 8, comprising a step of:
- combining a ram or a counterweight with the sonotrode so that it exercises a specific pressure of between 0.2.10⁵ and 6.10⁵ Pa on the sheets.

10. Method according to any one of claims 1 to 9, in which generating a relative movement comprises feeding the sheets with respect to the sealing assembly at a speed between 50 and 150 m/minute, and preferably between 60 and 80 m/minute.

11. Method according to any one of claims 1 to 10, comprising a step in which the passage of the sheets in said passage interstice causes creep in the sheet material on each side of said ridge.

12. Method according to claim 11, in which the creep step comprises creating a creep bead (B), which constitutes a primary sealing line, on each side of said ridge.

13. Method according to any one of the previous claims, in which, simultaneously with the sealing of the sheets, said sheets are cut.

14. Method according to claim 13, comprising causing during the cutting, the sheets to advance continuously in relation to the sealing assembly.

15. Method according to any one of claims 1 to 14, comprising the step of heating the sheets before sealing, in order to soften the internal faces of each sheet.

16. Method according to any one of claims 1 to 15, in which the sheets to be sealed comprise a central layer of gastight material between two layers of plastic material.

17. Method according to claim 16, in which the central layer comprises aluminium.

18. Method according to claims 16 or 17, comprising, during sealing, arranging for the respective internal layers of the two sheets opposite each other to fuse together, with the respective central layers of the two sheets coming into contact with each other.

19. Method according to claim 18, in which the internal layer of each sheet comprises polypropylene.

20. Flexible package, compring two sides joined at their side edges, the package being adapted to be obtained by a method according to claim 1 or any claims dependent on claim 1

21. Flexible package, adapted to be obtained by a method of claims 18 or 19, comprising: two sides constituted by two sheets comprising a central layers of gastight material between two layers of plastic material, and
a weld line joining said facing sheets, the respective central layers of the two sheets being in contact with each other at the weld line.

22. Flexible package according to claim 21, in which the central layer comprises aluminium.

23. Flexible package according to claim 21 or 22, in which the internal layer of each sheet comprises polypropylene.

24. Flexible package according to any one of claims 21 to 23, in which the width of said seal line is around one millimeter.

25. Flexible package according to any one of claims 21 to 24, in which the central layers which are in contact with each other constitute a gastight barrier.

26. Flexible package according to claim 25, in which the level of air leakage from the package is around 2.4.10⁻⁴ cm³/day.
